(19) Europäisches Patentamt
European Patent Office
Office européen des brevets

(11) Veröffentlichungsnummer : **0 343 435 B1**

(12) # EUROPÄISCHE PATENTSCHRIFT

(45) Veröffentlichungstag der Patentschrift :
07.08.91 Patentblatt 91/32

(51) Int. Cl.⁵ : **E03F 5/10**, F16K 31/30, G05D 7/01

(21) Anmeldenummer : **89108455.0**

(22) Anmeldetag : **11.05.89**

(54) **Schwimmergesteuerte Regelvorrichtung zur Veränderung des Durchflussquerschnitts der Auslauföffnung eines Ausgleichsbehälters, insbesondere eines Regenrückhaltebeckens.**

(30) Priorität : 21.05.88 DE 3817444
20.12.88 DE 3842744

(43) Veröffentlichungstag der Anmeldung :
29.11.89 Patentblatt 89/48

(45) Bekanntmachung des Hinweises auf die Patenterteilung :
07.08.91 Patentblatt 91/32

(84) Benannte Vertragsstaaten :
AT BE CH DE ES FR GB GR IT LI LU NL SE

(56) Entgegenhaltungen :
EP-A- 0 108 378
DE-C- 666 544

(56) Entgegenhaltungen :
GB-A- 2 027 470
US-A- 2 904 064
US-A- 4 617 806
PATENT ABSTRACTS OF JAPAN, Band 10, Nr. 316 (P-510) (2372) 28. Oktober 1986; & JP-A-61125616 (SHUNJI KATO) 13.06.1986

(73) Patentinhaber : **Alloy-Tech Aktiengesellschaft FL-9490 Vaduz (LI)**

(72) Erfinder : **Die Erfinder haben auf ihre Nennung verzichtet**

(74) Vertreter : **Patentanwälte Dipl.-Ing. F.W. Möll Dipl.-Ing. H.Ch. Bitterich Langstrasse 5 Postfach 2080 W-6740 Landau/Pfalz (DE)**

EP 0 343 435 B1

## Beschreibung

Die Erfindung betrifft eine schwimmergesteuerte Regelvorrichtung zur Veränderung des Durchflußquerschnitts der Auslauföffnung eines Ausgleichsbehälters zum Regulieren des Ablaufs von Abwasser und/oder Regenwasser, z.B. eines Rückhaltebeckens in Abhängigkeit von der Höhe des Wasserspiegels, mit einem über die Auslauföffnung führbaren Drosselorgan, das mittels Übertragungselementen unter Zwischenschaltung eines eine Steuerkurve aufweisenden Steuerorgans mit einem Schwimmer bewegungsschlüssig verbunden ist.

In Mischwasserkanälen werden zur Verminderung des Zulaufs zur Kläranlage bei Regen und zur Speicherung oder auch zur Klärung des Regenabflusses vor Einleitung des Regenwassers in den Vorfluter Regenentlastungen angeordnet. Zu den Regenentlastungen gehören neben einfachen Regenüberläufen vor allem Regenrückhaltebecken, Regenüberlaufbecken bzw. Kanalstauräume mit Entlastung und Regenwasserklärbecken. Regenrückhaltebecken beispielsweise speichern die großen Wassermengen, die bei starken Regenfällen plötzlich abfließen und geben sie langsam und gedrosselt wieder ab.

Ein besonderes Problem bei Bau und Betrieb solcher Regenentlastungen liegt in der Begrenzung des Abflusses, wofür verschiedene Arten von Drosselanlagen bekannt sind. Durch diese Drosselanlagen muß gewährleistet werden, daß auch bei starken Regenfällen der Wasserabfluß möglichst konstant bleibt. Da Regenüberlaufbecken sich bei starken Regenfällen innerhalb weniger Minuten bis zum Überlaufen füllen können, muß die Reaktionszeit der Drosselanlagen wesentlich kürzer sein als die Füllzeit des Stauraumes.

Drosselanlagen dieser Art sollen möglichst selbsttätig und wartungsfrei arbeiten. So gibt es neben den klassischen Drosseleinrichtungen, wie Drosselstrecke, Steckschieber usw. neuerdings eine Reihe von elektrisch und hydraulisch-mechanisch arbeitenden Drosselorganen. Letztere werden meist im Rückhaltebecken selbst vor der Auslauföffnung angeordnet. Die Bewegung des Drosselorgans, z.B. einer Drosselblende oder eines Drosselschiebers, wird in Abhängigkeit von der Höhe des Flüssigkeitsspiegels durch einen Schwimmer gesteuert, der mittels Übertragungselementen mit dem Drosselorgan bewegungsschlüssig verbunden ist. Diese Bauart hat zwar den Vorteil, daß sie kompakt aufgebaut ist und daß das Drosselorgan unmittelbar auf die Auslauföffnung einwirkt; es besteht aber das Problem, daß die Drosselanlage im Betrieb unter Wasser arbeitet, also Verschmutzungen und Korrosionserscheinungen stark ausgesetzt ist und daß Verstopfungen der Auslauföffnung nicht oder nur mit großen Anstrengungen beseitigt werden können.

Bei einer bekannten Regelvorrichtung dieser Art besteht das Drosselorgan aus einer Blende, die vor die Auslauföffnung schwenkbar ist (EP-A-0132775). Die Drosselblende wird durch einen Schwimmer betätigt, der über einen Schwimmerarm mit einer oberen, um eine gemeinsame ortsfeste Drehachse drehbar gelagerten Scheibe drehfest verbunden ist. Die Scheibe ist ihrerseits mittels eines umlaufenden Seiles mit einer unteren, um eine ortsfeste Drehachse drehbar gelagerten Scheibe bewegungsschlüssig verbunden, an welcher die Blende drehfest angebracht ist. Bei einer anderen bekannten Regelvorrichtung, die ähnlich aufgebaut ist, wird die Bewegung des Schwimmerarmes bei Veränderungen des Wasserspiegels über eine mit ihm verbundene Steuerscheibe mit einer Steuerkurve auf die Führungsstange eines in vertikaler Richtung vor die Auslauföffnung bewegbaren Drosselschiebers übertragen (EP-A-0108378).

Bei Regelvorrichtungen dieser Art wird die Bewegung des Schwimmerarms unmittelbar als Drehbewegung auf die Drosselblende übertragen; diese Bauart bedingt deshalb für unterschiedliche Beckengrößen mit unterschiedlichen Füllhöhen unterschiedliche Längen des Schwimmerarmes. Wenn auch die wesentlichen bewegten Teile verkapselt sind, so arbeitet die gesamte Vorrichtung einschließlich des Schwimmers doch unter Wasser, ist also generell der Verschmutzung und Korrosion anheim gegeben.

Die beachtliche Investition, die ein Regenrückhaltebecken darstellt, wird erst durch die einwandfreie Funktion der Vorrichtung zum Regulieren des Ablaufs gerechtfertigt. Ein wichtiger Faktor ist dabei die Einhaltung des festgelegten Nennabflusses. Wesentliche Grundbedingungen für die Funktion einer Drosselanlage sind deshalb die Güte der Abflußcharakteristik, also die Gleichförmigkeit der Abflußmenge auch bei unterschiedlichen Wasserständen im Oberwasser sowie ihre Funktionstüchtigkeit, möglichst ohne die Gefahr von Verstopfungen.

Der Erfindung liegt vor diesem Hintergrund die Aufgabe zugrunde, eine schwimmergesteuerte Regelvorrichtung der eingangs angegebenen Art zu schaffen, die einfach und möglichst korrosionsgeschützt aufgebaut ist, die auch bei wechselnden Wasserständen einwandfrei funktioniert und eine gleichmäßige Abflußcharakteristik besitzt.

Nach der Erfindung wird diese Aufgabe dadurch gelöst, daß der Schwimmer mit vertikaler Bewegungsrichtung an einer Führung längsbeweglich geführt in einem lediglich an seiner Unterseite offenen gasgefüllten Gehäuse angeordnet ist, das sowohl den Schwimmer, als auch die Übertragungselemente und zumindest teilweise das Drosselorgan umschließt und in dem sich der Flüssigkeitsspiegel in Abhängigkeit von dem durch den der Höhe des Flüssigkeitsspiegels im Behälter entsprechenden Druck bestimmten Volumen des eingeschlossenen Gases einstellt.

Grundlage des Funktionsprinzips der erfindungsgemäßen Regelvorrichtung ist das Gesetz von Boyle-Mariotte, daß bei konstanter Temperatur das Volumen einer eingeschlossenen Gasmenge deren Druck umgekehrt proportional ist. Dadurch, daß der Schwimmer nach der Erfindung in einem lediglich an seiner Unterseite offenen gasgefüllten Gehäuse, einer Art Glocke, angeordnet ist, führt der Wasserspiegel, durch den er Vertikalbewegungen unterworfen ist, nur Schwankungen aus, die den Wasserspiegelschwankungen im Behälter zwar direkt proportional, aber wesentlich geringer sind als diese. Jedem Wasserspiegel im Behälter kann somit ein exakt bestimmbarer Wasserspiegel in dem Gehäuse zugeordnet werden. Dadurch können beliebig hohe Wasserstände ohne aufwendige Schwimmerkonstruktionen unmittelbar erfaßt und als Regelgröße weitergegeben werden.

Dieses physikalische Phänomen ist zwar bereits für die Regelung von Flüssigkeitsständen angewandt worden, und zwar bei einer Vorrichtung zur Eisbereitung (US-A-4617806). Bei dieser bekannten Vorrichtung ist mit einem oben offenen Flüssigkeitsbehälter ein geschlossener, kleinerer Behälter kommunizierend verbunden, in dem sich ein Schwimmer befindet, der auf elektrische Kontakte wirkt.

Der wesentliche Vorteil der Erfindung wird vor allem darin gesehen, daß, das erfindungsgemäße Prinzip der Regelgrößenerfassung auf hydraulisch-mechanischem Wege unmittelbar und vor allem ohne Energiezufuhr zur Steuerung des Drosselorgans verwendet werden kann. Dadurch wird es möglich, alle für die Steuerung wesentlichen Übertragungselemente in dem abgeschlossenen Luftraum innerhalb des Gehäuses unterzubringen, so daß sie durch das Schmutzwasser nicht benetzt werden.

Zweckmäßig ist als Steuerorgan eine Kulissensteuerung vorgesehen mit einem in einer Kulissenscheibe angeordneten Führungsschlitz und einem darin geführten, auf die Übertragungselemente wirkenden Kulissenstein. Die Kulissenscheibe ist zweckmäßig in einer rechtwinklig zur Ablaufrichtung verlaufenden Ebene und der Kulissenstein an einem quer zur Ablaufrichtung bewegbaren Lagerbock angeordnet.

Als Übertragungselement ist zweckmäßig ein Gelenkhebelsystem vorgesehen aus einem oberen, mittels eines Gelenkes an den Lagerbock und einem unteren, mittels eines Gelenkes an der Grundplatte gelagerten Gelenkhebels, die an ihren freien Enden gelenkig miteinander und mit einer mit dem Drosselorgan in Wirkverbindung stehenden Schubstange verbunden sind.

Als Drosselorgan ist vorzugsweise ein entlang einer vertikalen Führung bewegbarer Drosselschieber vorgesehen.

Die Gelenkhebel können so zueinander und zur Kulissenscheibe angeordnet sein, daß die Drehpunkte der Gelenke, mit denen sie am Lagerbock einerseits und an der Grundplatte andererseits angeschlossen sind, in geöffnetem Zustand des Drosselschiebers etwa übereinanderliegen.

Die Gelenkhebel sind zweckmäßigerweise zumindest annähernd gleich lang. Der Abstand zwischen den Gelenken, mit denen die Gelenkhebel am Lagerbock einerseits und an der Grundplatte andererseits angeschlossen sind, sind zweckmäßig etwa halb so groß wie die Länge der Gelenkhebel selbst. Deren Länge entspricht zweckmäßig dem Durchmesser der Auslauföffnung.

Der Vorteil dieser Ausführungsform der Erfindung, bei der die vertikale Aufwärtsbewegung des Schwimmers mittels der Kulissensteuerung in eine Horizontalbewegung und diese mittels eines Gelenkhebelsystems in eine vertikale Abwärtsbewegung umgesetzt wird, die unmittelbar auf das Drosselorgan wirkt, besteht darin, daß zur Beeinflussung der Abflußcharakteristik der Regelvorrichtung drei Einflußgrößen zur Verfügung stehen, nämlich einmal die am Anfang stärkere Zusammendrückung des eingeschlossenen Gasvolumens, zum anderen die Form des Führungsschlitzes der Kulissensteuerung und schließlich die Gestaltung, Zuordnung und Lagerung der einzelnen Teile und Drehpunkte des Gelenkhebelsystems.

Besonders vorteilhaft ist, daß es durch die Ausbildung und Zuordnung der einzelnen Teile des Steuerorgans und der Übertragungselemente gelingt, zu einer besonders kompakten, d.h. flachen und auch niedrigeren Bauart der Regelvorrichtung zu kommen. So ist die Höhe der Regelvorrichtung praktisch nur durch die Größe der Vertikalbewegung des Schwimmers bestimmt. Dies ist vor allem dann von Bedeutung, wenn eine solche Regelvorrichtung in verhältnismäßig flache Ausgleichsbehälter eingebaut werden soll.

Auch ist es möglich, das Volumen des eingeschlossenen Gases durch seitlich oder oberhalb der Regelvorrichtung angeordnete und über Rohrleitungen oder Schläuche mit deren Luftraum verbundene Ausdehnungsbehälter herbeizuführen. In einem solchen Ausdehnungsbehälter kann auch durch eine elastisch dehnbare Membran ein abgeschlossener Raum gebildet werden, der von außen mit Gas beaufschlagt werden kann, um so von außen auf die Funktion der Regelvorrichtung einwirken zu können, diese beispielsweise zu einem vorzeitigen Öffnen oder Schließen, z.B. bei Verstopfungen, zu veranlassen.

Die Erfindung wird nachstehend anhand der Zeichnung näher erläutert. Es zeigt

Fig. 1    eine Frontansicht und

Fig. 2    eine Seitenansicht einer Regelvorrichtung nach der Erfindung bei Trockenwetterabfluß,

EP 0 343 435 B1

Fig. 3    einen Schnitt entlang der Linie III-III in Fig. 1,
Fig. 4    einen Schnitt entlang der Linie IV-IV in Fig. 2,
Fig. 5    eine Frontansicht der Regelvorrichtung bei gefülltem Becken mit geschlossenem Drosselorgan,
Fig. 6    eine größere Darstellung des Gelenkhebelsystems und
Fig. 7    einen Ausdehnungsbehälter.

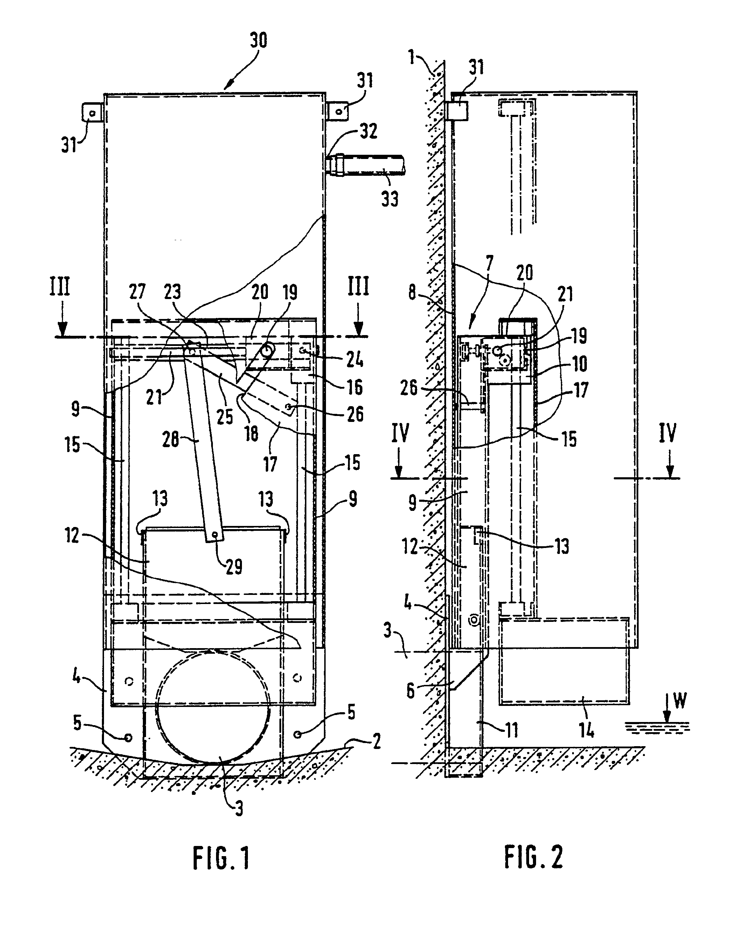

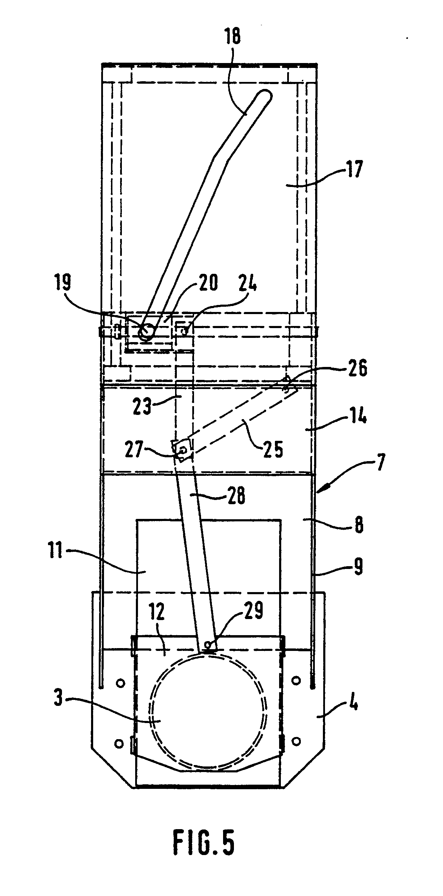

In den Fig. 1 und 2 sind von einem Regenrückhaltebecken, in das ablaufseitig die erfindungsgemäße Regelvorrichtung eingebaut ist, nur die Beckenstirnwand 1 und der Beckenboden 2 mit dem zur Auslauföffnung 3 führenden Gerinne angedeutet.

Die erfindungsgemäße Regelvorrichtung umfaßt eine Grundplatte 4, die der Befestigung der gesamten Vorrichtung, z.B. mittels Schrauben 5, an der Beckenstirnwand 1 dient. An der Grundplatte 4 ist über Konsolen 6 ein Grundrahmen 7 befestigt, der im Querschnitt etwa U-förmige Gestalt hat. Der Grundrahmen 7, der sich in geringem Abstand von der Beckenstirnwand 1 befindet, besteht aus einer zur Beckenstirnwand 1 parallelen Rückwand 8 sowie seitlichen Wangen 9, die sich nach oben hin zu Konsolen 10 verbreitern.

An der Grundplatte 4 ist im Bereich der Auslauföffnung 3 eine Schieberführung 11 befestigt, die aus einem vergleichsweise flachen, länglichen kastenartigen Gehäuse besteht, das die Auslauföffnung 3 mit umfaßt. Entlang dieser Schieberführung 11 ist ein Drosselschieber 12 in vertikaler Richtung bewegbar ; der Drosselschieber 12 weist seitliche Aufkantungen 13 zur Geradführung auf ; er ist an seinem unteren Ende abgeschrägt.

Zur Betätigung des Drosselschiebers 12 ist ein Schwimmer 14 vorgesehen. Auf dem Schwimmer 14 sind zwei vertikale Führungsstangen 15 befestigt, von denen zumindest eine in einem Lagerbock 16 in vertikaler Richtung geführt ist ; der Lagerbock 16 ist an einer der Konsolen 10 des Grundrahmens 7 befestigt. Der Schwimmer 14 ist auf diese Weise bei seinen wasserspiegelabhängigen Vertikalbewegungen geführt.

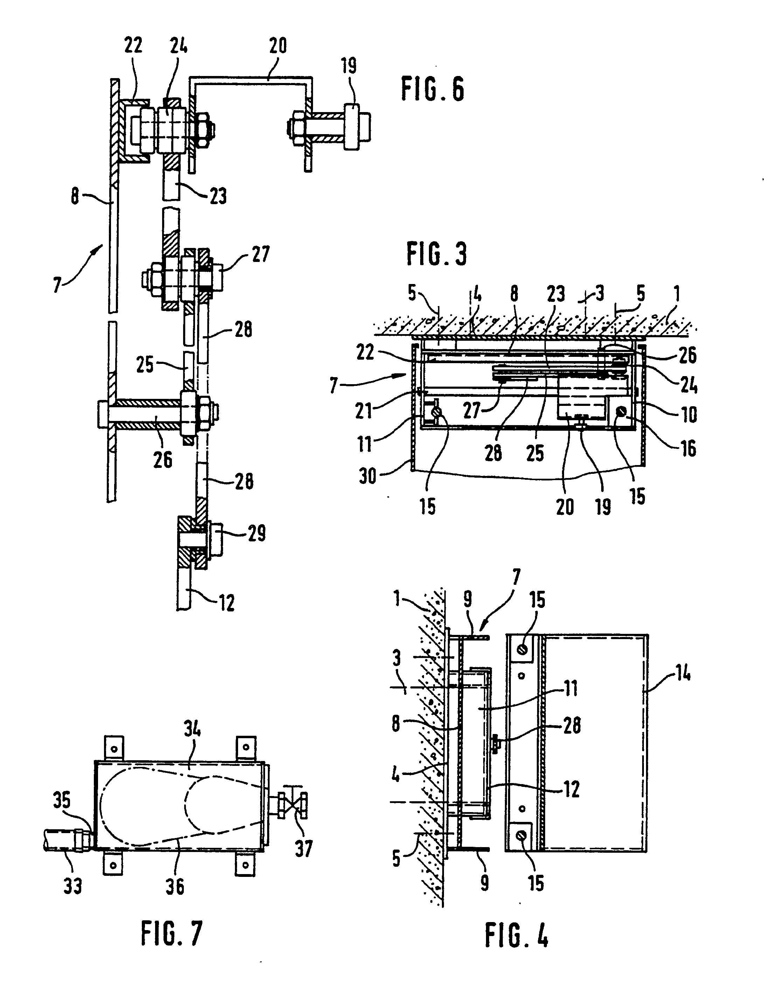

Mit dem Schwimmer 14 ist auch das Steuerorgan verbunden ; es umfaßt eine Kulissensteuerung aus einer Kulissenscheibe 17 mit einem Führungsschlitz 18, in dem ein Kulissenstein 19 gleitet. Der Kulissenstein 19 ist an einem Lagerbock 20 befestigt, der seinerseits an einem Führungsstab 21 in horizontaler Richtung quer zur Ablaufrichtung bewegbar ist (Fig. 1 und 3). Zusätzlich ist der Lagerbock 20 in einer an der Rückwand 8 des Grundrahmens 7 angeordneten Führungsschiene 22 geführt. Mittels der Kulissensteuerung wird so die Vertikalbewegung des Schwimmers 14 in eine Horizontalbewegung des Lagerbocks 20 umgesetzt. Dabei ist, wie vor allem aus Fig. 5 erkennbar ist, die Form des Führungsschlitzes 18 so gewählt, daß der Lagerbock 20 bereits zu Beginn der Hebung des Schwimmers 14 eine vergleichsweise große Strecke in horizontaler Richtung zurücklegt, also bereits nahezu die Hälfte seines Gesamtweges, während er sich im weiteren Verlauf seiner Bewegung langsamer bewegt.

Die durch die Kulissensteuerung bewirkte Horizontalbewegung des Lagerbocks 20 wird über ein Gelenkhebelsystem auf den Drosselschieber 12 übertragen. Das Gelenkhebelsystem besteht aus einem oberen Gelenkhebel 23, der mit seinem einen Ende in einem Gelenk 24 am Lagerbock 20 befestigt ist und einem unteren Gelenkhebel 25, der mit einem ortsfesten Gelenk 26 an der Rückwand 8 des Grundrahmens 7 angelenkt ist. Die jeweils anderen Enden der beiden Gelenkhebel 23 und 25 sind in einem Gelenk 27 miteinander und zugleich mit einer Schubstange 28 verbunden, die in einem Gelenk 29 am Drosselschieber 12 befestigt ist.

Über diese Regelvorrichtung ist ein Außengehäuse 30 gestülpt, das in den Spalt zwischen der Rückwand 8 des Grundrahmens 7 und der Behälterwand 1 geschoben und an dieser mittels Befestigungslaschen 31 befestigt ist. An das Außengehäuse 30 kann ein Anschlußstutzen 32 angeschlossen sein, der über ein Verbindungsrohr 33 zu einem Ausdehnungsbehälter 34 führt, an den das Verbindungsrohr 33 wiederum mittels eines Anschlußstutzens 35 angeschlossen ist (Fig. 1 und 7).

Die Funktion der erfindungsgemäßen Regelvorrichtung kann wie folgt beschrieben werden. Bei einem Ansteigen des Wasserspiegels W über den Trockenwetterabfluß (Fig. 2) hinaus wird der Schwimmer 14 gehoben. Dadurch wird mittels der Kulisse der Lagerbock 20 auf dem Führungsstab 21 in der in Fig. 1 dargestellten Frontansicht nach links geführt. Dadurch wirkt der obere Gelenkhebel 23, der am Lagerbock 20 angelenkt ist, über das Gelenk 27 auf den unteren, bei 26 am Grundrahmen 7 angelenkten Gelenkhebel 25 ; das Gelenk 27 beschreibt so einen Kreisbogen um das ortsfeste Gelenk 26. Zugleich wird dabei die ebenfalls im Gelenk 27 angelenkte Schubstange 28 nach unten geführt und so der Drosselschieber 12 geschlossen.

In der in der Zeichnung dargestellten Ausführungsform sind die beiden Gelenkhebel 23 und 25 gleich lang ; ihre Länge entspricht etwa dem Durchmesser der Auslauföffnung 3. Die Gelenke 24 und 26, mit denen die Gelenkhebel 23 und 25 einerseits am Lagerbock 20 und andererseits am Grundrahmen 7 befestigt sind, liegen etwa übereinander ; ihr Abstand entspricht etwa der halben Länge der beiden Gelenkhebel. Infolge dieser Geometrie wird in Verbindung mit der Form des Führungsschlitzes 18 in der Kulissenscheibe 17 erreicht, daß durch den Drosselschieber 12 schon bei einem geringen Ansteigen des Wasserspiegels im Ausgleichsbehälter die Auslauföffnung 3 bis über die Hälfte geschlossen wird. Damit ist es möglich, den Ablauf schon zu Beginn des Ansteigens des Wasserspiegels im Ausgleichsbehälter wirksam zu drosseln und so schon zu Beginn des Rege-

4

nereignisses eine effektive Rückhaltung des Wassers und eine weitestgehend gleichmäßige Abflußcharakteristik zu erhalten. Eine Frontansicht der Regelvorrichtung mit vollständig geschlossenem Drosselschieber zeigt Fig. 5.

In Fig. 7 ist schließlich noch angedeutet, wie in einem Ausdehnungsbehälter 34 eine elastisch dehnbare Membran 36 angeordnet sein kann, die über ein Druckventil 37 von außen her mit Gas beaufschlagt werden kann. Durch Beaufschlagung mit Gas dehnt sich die Membran 36 in der strichpunktiert angedeuteten Weise aus ; dadurch wird die im Ausdehnungsbehälter 34 und auch innerhalb des Außengehäuses 30 eingeschlossene Gasmenge stärker komprimiert. Durch entsprechende Dosierung kann so über den Druck des eingeschlossenen Gases auf die Höhe des Wasserspiegels im Außengehäuse 30 und so auch auf die Stellung des Schwimmers 14 eingewirkt werden, um die Stellung des Drosselschiebers 12 zu beeinflussen.

## Patentansprüche

1. Schwimmergesteuerte. Regelvorrichtung zur Veränderung des Durchflußquerschnitts der Auslauföffnung (3) eines Ausgleichsbehälters zum Regulieren des Ablaufs von Abwasser und/oder Regenwasser, z.B. eines Rückhaltebeckens in Abhängigkeit von der Höhe des Wasserspiegels, mit einem über die Auslauföffnung (3) führbaren Drosselorgan, das mittels Übertragungselementen unter Zwischenschaltung eines eine Steuerkurve aufweisenden Steuerorgans mit einem Schwimmer (14) bewegungsschlüssig verbunden ist, dadurch gekennzeichnet, daß der Schwimmer (14) mit vertikaler Bewegungsrichtung an einer Führung längsbeweglich geführt in einem lediglich an seiner Unterseite offenen gasgefüllten Gehäuse (30) angeordnet ist, das sowohl den Schwimmer (14), als auch die Übertragungselemente und zumindest teilweise das Drosselorgan umschließt und in dem sich der Flüssigkeitsspiegel in Abhängigkeit von dem durch den der Höhe des Flüssigkeitsspiegels im Behälter entsprechenden Druck bestimmten Volumen des eingeschlossenen Gases einstellt.

2. Regelvorrichtung nach Anspruch 1, dadurch gekennzeichnet, daß als Steuerorgan eine Kulissensteuerung mit einem in einer Kulissenscheibe (17) angeordneten Führungsschlitz (18) und einem darin geführten, auf die Übertragungselemente wirkenden Kulissenstein (19) vorgesehen ist.

3. Regelvorrichtung nach Anspruch 1 oder 2, dadurch gekennzeichnet, daß die Kulissenscheibe (17) in einer rechtwinklig zur Ablaufrichtung verlaufenden Ebene und der Kulissenstein (19) an einem quer zur Ablaufrichtung bewegbaren Lagerbock (20) angeordnet sind.

4. Regelvorrichtung nach einem der Ansprüche 1 bis 3, dadurch gekennzeichnet, daß als Übertragungselement ein Gelenkhebelsystem aus einem oberen (23), mittels eines Gelenkes (24) an dem Lagerbock (20) und einem unteren (25), mittels eines Gelenkes (26) an der Grundplatte (8) gelagerten Gelenkhebel vorgesehen ist, die an ihren freien Enden gelenkig (27) miteinander und mit einer mit dem Drosselorgan in Wirkverbindung stehenden Schubstange (28) verbunden sind.

5. Regelvorrichtung nach einem der Ansprüche 1 bis 4, dadurch gekennzeichnet, daß als Drosselorgan ein entlang einer vertikalen Führung (11) bewegbarer Drosselschieber (12) vorgesehen ist.

6. Regelvorrichtung nach Anspruch 4 oder 5, dadurch gekennzeichnet, daß die Gelenkhebel (23, 25) so zueinander und zur Kulissenscheibe (17) angeordnet sind, daß die Drehpunkte der Gelenke (24, 26), mit denen sie am Lagerbock (20) einerseits und an der Grundplatte (8) andererseits angeschlossen sind, in geöffnetem Zustand des Drosselschiebers (12) etwa übereinanderliegen.

7. Regelvorrichtung nach einem der Ansprüche 4 bis 6, dadurch gekennzeichnet, daß die Gelenkhebel (23, 25) zumindest annähernd gleich lang sind.

8. Regelvorrichtung nach Anspruch 6 oder 7, dadurch gekennzeichnet, daß der Abstand zwischen den Gelenken (24, 26), mit denen die Gelenkhebel (23, 25) am Lagerbock (20) einerseits und an der Grundplatte (8) andererseits angeschlossen sind, etwa halb so groß ist wie die Länge der Gelenkhebel selbst.

9. Regelvorrichtung nach Anspruch 7 oder 8, dadurch gekennzeichnet, daß die Länge der Gelenkhebel (23, 25) etwa dem Durchmesser der Auslauföffnung (3) entspricht.

10. Regelvorrichtung nach einem der Ansprüche 1 bis 9, dadurch gekennzeichnet, daß an das Gehäuse (30) ein Ausdehnungsbehälter (34) für das eingeschlossene Gas angeschlossen ist.

11. Regelvorrichtung nach Anspruch 10, dadurch gekennzeichnet, daß in dem Ausdehnungsbehälter (34) durch eine elastisch dehnbare Membran (36) ein gesondert mit Gas beaufschlagbarer Raum gebildet ist.

## Claims

1. A float-controlled control device for varying the flow cross-section of the outlet opening (3) of a compensating tank for regulating the outlet of waste water and/or rain water, for example of a retaining basin, depending on the height of the water level, with a restrictor member which can be guided over the outlet opening (3) and which by means of transmission elements, with the interposition of a control member having a control cam, is connected with a float (14) so as to be constrained to move therewith, characterised in that the float (14) is guided for longitudinal movement with a vertical direction of movement on a guide in a gas-filled housing (30) which is open only on its underside and which encloses both the float (14) and the transmission elements and at least partially the restrictor member, and in which the liquid level is adjusted depending on the volume of the enclosed gas determined by the pressure corresponding to the height of the liquid level in the tank.

2. A control device according to Claim 1, characterised in that there is provided as the control member a link motion between a guide slot (18) disposed in a slotted plate (17) and a sliding block (19) guided therein and acting on the transmission elements.

3. A control device according to Claim 1 or 2, characterised in that the slotted plate (17) is disposed in a plane extending at right angles to the outlet direction and the sliding block (19) is disposed on a bearing block (20) movable transversely to the outlet direction.

4. A control device according to any one of Claims 1 to 3, characterised in that there is provided as the transmission element a toggle joint system comprising an upper toggle joint (23) mounted by means of a joint (24) on a bearing block (20) and a lower toggle joint (25) mounted by means of a joint (26) on the base plate (8), which toggle joints are connected to one another in an articulated manner (27) at their free ends and are connected to a connecting rod (28) operatively connected with the restrictor member.

5. A control device according to any one of Claims 1 to 4, characterised in that a restrictor slide valve (12), which is displaceable along a vertical guide (11), is provided as the restrictor member.

6. A control device according to Claim 4 or 5, characterised in that the toggle joints (23, 25) are so arranged relative to one another and to the slotted plate (17) that the pivot points of the joints (24, 26), with which they are connected to the bearing block (20), on the one hand, and to the base plate (8), on the other hand, are situated approximately one above the other in the open position of the restrictor slide valve (12).

7. A control device according to any one of Claims 4 to 6, characterised in that the toggle joints (23, 25) are at least approximately of equal length.

8. A control device according to Claim 6 or 7, characterised in that the distance between the joints (24, 26), with which the toggle joints (23, 25) are connected to the bearing block (20), on the one hand, and to the base plate (8), on the other hand, is approximately half as great as the length of the toggle joints themselves.

9. A control device according to Claim 7 or 8, characterised in that the length of the toggle joints (23, 25) corresponds approximately to the diameter of the outlet opening (3).

10. A control device according to any one of Claims 1 to 9, characterised in that an expansion tank (34) for the enclosed gas is connected to the housing (30).

11. A control device according to Claim 10, characterised in that a separate chamber, to which gas can be admitted, is formed in the expansion tank (34) by an elastically expansible membrane (36).

## Revendications

1. Dispositif de régulation commandé par flotteur, destiné à faire varier la section d'écoulement de l'ouverture d'évacuation (3) d'un réservoir de compensation, en vue de réguler l'évacuation des eaux usées et/ou des eaux de pluie, par exemple d'un bassin de retenue, en fonction de la hauteur du niveau d'eau, comportant un organe d'étranglement guidé sur l'ouverture d'évacuation (3) qui est lié en mouvement à un flotteur (14), au moyen d'éléments de transmission, avec interposition d'un organe de commande présentant une came de commande, caractérisé en ce que le flotteur (14), déplaçable longitudinalement, guidé verticalement sur un organe de guidage, est placé dans un boîtier (30) rempli de gaz, ouvert uniquement sur son côté inférieur, lequel boîtier contient le flotteur (14) ainsi que les éléments de transmission et au moins une partie de l'organe d'étranglement et dans lequel le niveau de liquide s'établit en fonction du volume du gaz enfermé, déterminé par la pression correspondant à la hauteur du niveau d'eau dans le réservoir.

2. Dispositif de régulation selon la revendication 1, caractérisé en ce qu'il est prévu comme organe de commande, une commande à coulisse avec une fente de guidage (18) placée dans une plaque à coulisse (17) et un coulisseau (19), guidé à l'intérieur de cette fente, agissant sur les éléments de transmission.

3. Dispositif de régulation selon la revendication 1 ou 2, caractérisé en ce que la plaque à coulisse (17) est disposée dans un plan perpendiculaire à la direction d'évacuation et le coulisseau (19) est disposé sur un support (20) mobile transversalement à la direction d'évacuation.

4. Dispositif de régulation selon l'une des revendications 1 à 3, caractérisé en ce qu'il est prévu comme élément de transmission, un système à leviers articulés, constitué d'un levier articulé supérieur (23) monté sur le support (20) au moyen d'une articulation (24) et d'un levier articulé inférieur (25), monté sur la plaque de base (8), au moyen d'une articulation (26), lesquels leviers sont reliés entre eux de manière articulée (27), à leurs extrémités libres, ainsi qu'avec une bielle (28) qui est en liaison active avec l'organe d'étranglement.

5. Dispositif de régulation selon l'une des revendications 1 à 4, caractérisé en ce qu'il est prévu comme organe d'étranglement un tiroir d'étranglement (12), mobile le long d'un organe de guidage (11) vertical.

6. Dispositif de régulation selon la revendication 4 ou 5, caractérisé en ce que les leviers articulés (23, 25) sont disposés l'un par rapport à l'autre et par rapport à la plaque à coulisse (17), de manière que les points de rotation des articulations (24, 26), par lesquelles ils sont raccordés au support (20) d'une part et à la plaque de base (8) d'autre part, soient à peu près superposés à l'état ouvert du tiroir d'étranglement (12).

7. Dispositif de régulation selon l'une des revendications 4 à 6, caractérisé en ce que les leviers articulés (23, 25) ont au moins à peu près la même longueur.

8. Dispositif de régulation selon la revendication 6 ou 7, caractérisé en ce que la distance séparant les articulations (24, 26) par lesquelles les leviers articulés (23, 25) sont raccordés au support (20) d'une part et à la plaque de base (8) d'autre part, est à peu près égale à la moitié de la longueur des leviers articulés.

9. Dispositif de régulation selon la revendication 7 ou 8, caractérisé en ce que la longueur des leviers articulés (23, 25) correspond à peu près au diamètre de l'ouverture d'évacuation (3).

10. Dispositif de régulation selon l'une des revendications 1 à 9, caractérisé en ce qu'un réservoir d'expansion (34) est raccordé au boîtier (30) pour le gaz qu'il contient.

11. Dispositif de régulation selon la revendication 10, caractérisé en ce qu'une membrane (36), extensible élastiquement, forme dans le réservoir d'expansion (34), un volume alimenté séparément en gaz.

FIG.1

FIG.2

FIG.5

**FIG. 6**

**FIG. 3**

**FIG. 7**

**FIG. 4**